# EUROPEAN PATENT APPLICATION

(11) **EP 4 336 676 A1**
(43) Date of publication of application: **13.03.2024**
(21) Application number: 23000122.4
(22) Date of filing: 06.09.2023
(51) Int. Cl.: H01R 33/09, H01R 33/92, F21S 4/10, F21V 23/06, H01R 9/24, H01R 13/58, H01R 13/512, H01R 13/73, F16B 13/06

(54) **LIGHTING APPARATUS**

(30) Priority: 07.09.2022 IT 202200018276
(71) Applicant: Mosaic S.p.A., 10153 Torino (TO) (IT)
(72) Inventor: PARENZAN, Guido, 24129 BERGAMO (IT)
(74) Representative: Aprà, Mario

(57) **Abstract**

Lighting apparatus (10, 20) comprising an electric light bulb (L1, L2), a first section of insulated electrical cable (C11, C21) and a second section of insulated electrical cable (C12, C22), each including at least one insulated live wire and one insulated neutral wire, wherein said lighting apparatus (10, 20) also comprises:
- a supporting device (11, 21) with respect to an external holder;
- a connecting device (12, 22) for the electrical and mechanical connection of said electric light bulb (L1, L2), fixed to said supporting device (11, 21).

Said connecting device (12, 22) for the electrical and mechanical connection of said electric light bulb (L1, L2) comprises:
- a crown-like holder means (12.1, 22.1),
- wherein said crown-like holder means (12.1, 22.1) has an Internal seat housing an electrically conducting live head and an electrically conducting neutral head;

- an electrical contact holder plate 13.1, 23.1, made of electrically insulating material, housed and held In said crown-like holder means (12.1, 22.1);
- wherein said electrical contact holder plate (13.1, 23.1) comprises, on a first face (13.11, 23.11), a first electrical terminal (13.12, 23.12), which fixes said electrically conducting live head, in an electrically conducting manner, and a second electrical terminal (13.13, 23.13), which fixes said electrically conducting neutral head, in an electrically conducting manner, and
- wherein said first electrical terminal (13.12, 23.12) is electrically connected to a neutral electrical contact (13.14, 23.14) and said second electrical terminal (13.13, 23.13) is electrically connected to a live electrical contact (13.15, 23.15), which are fixed with respect to a second face (13.16, 23.16) of said electrical contact holder plate.

## Description

The present invention refers to a lighting apparatus.

An object of the present invention is to provide a lighting apparatus, which can be fixed to an external holder with simple and rapid operations.

Documents WO 2021/084415 A1, US 10871276 B1, WO 2021/0844157 A1 disclose a lighting apparatus according to the pre-characterizing part of claim 1.

Another object of the invention is to provide a lighting apparatus, which can be removed from an external holder, to which it is fixed, and then fixed again to another external holder with simple and rapid operations.

Yet another object of the invention is to provide a lighting apparatus, which can be connected in line, with respect to at least one other lighting apparatus according to the invention, allowing an arrangement of lighting apparatuses with an efficacious lighting effect and pleasing aesthetic effect to be formed.

A further object of the invention is to provide a lighting apparatus as specified, wherein the electric part is tightly sealed against any infiltrations of liquids and/or environmental humidity.

Yet another object of the invention is to provide a lighting apparatus as specified, that has a simplified structure and low production cost.

In view of these objects, the present invention provides a lighting apparatus, the essential feature of which form the subject matter of claim 1.

Further advantageous features of the invention are described in the dependent claims.

Features and advantages of the invention will be more apparent from the detailed description below of examples of embodiment, with reference to the accompanying drawing, which shows important details for the invention, and from the claims.

The features illustrated herein must not necessarily be understood to scale and are represented so that the particularities according to the invention are clearly highlighted.

The different features can be produced individually or in any combination with one another, as variants of the invention.

In particular, the invention provides a lighting apparatus comprising an electric light bulb, a first section of insulated electrical cable and a second section of insulated electrical cable, each including at least one insulated live wire and one insulated neutral wire, wherein said lighting apparatus also comprises:
- a supporting device with respect to an external holder, wherein said supporting device is configured as an open electrical box, which is fixed with respect to an external holder by means of detachable fastening means and which holds inside it a first end of said first section of electrical cable and a first end of said second section of electrical cable, wherein at least the respective live and neutral wires are mutually connected both mechanically and electrically;
- an electrical and mechanical connecting device of said electric light bulb, wherein said connecting device is fixed to said supporting device by means of detachable fastening means and holds a portion of said electric light bulb, arranged with the respective electrical contacts electrically connected to said mutually connected live and neutral wires and mechanically connected in a detachable manner to said supporting device;
- a covering device which covers said electrical and mechanical connecting device and a part of said electric light bulb, wherein said covering device comprises an external jacket, which rests against said supporting device, and a gasket that surrounds a part of said electric light bulb corresponding to said external jacket, and wherein a second end at least of the live wire and neutral wire of said first section of electrical cable is electrically connected to other electrical circuit means, and a second end at least of the live wire and neutral wire of said second section of electrical cable is electrically connected to further electrical circuit means.

### Brief description of the drawing

In the drawing:

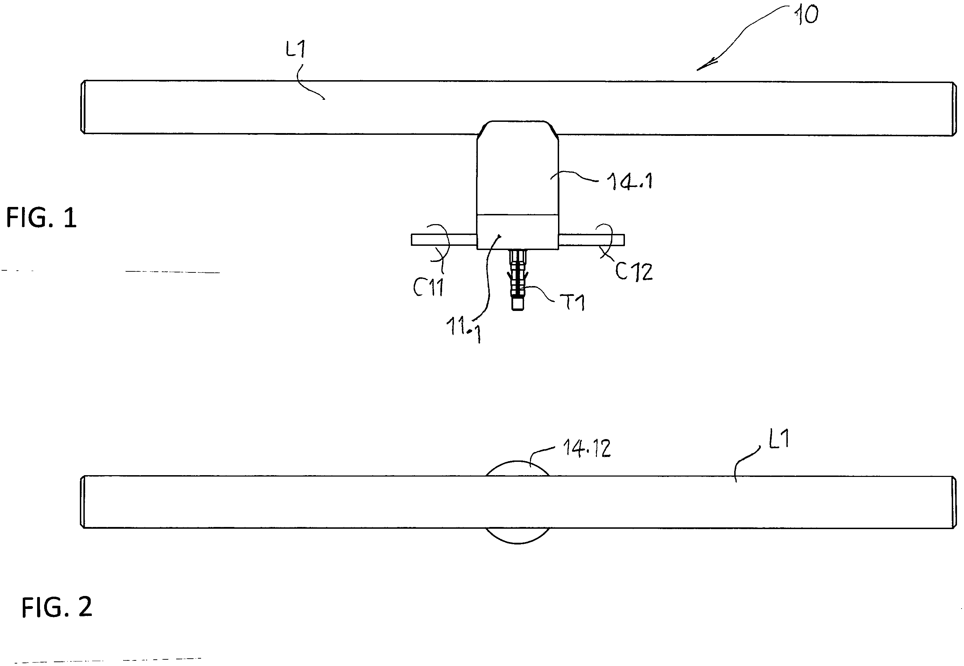

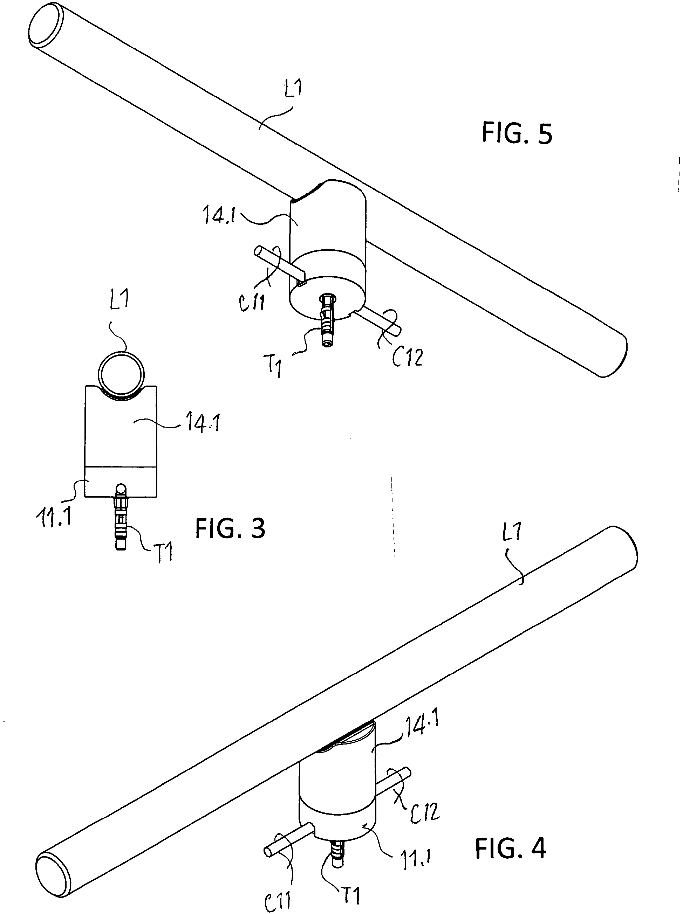

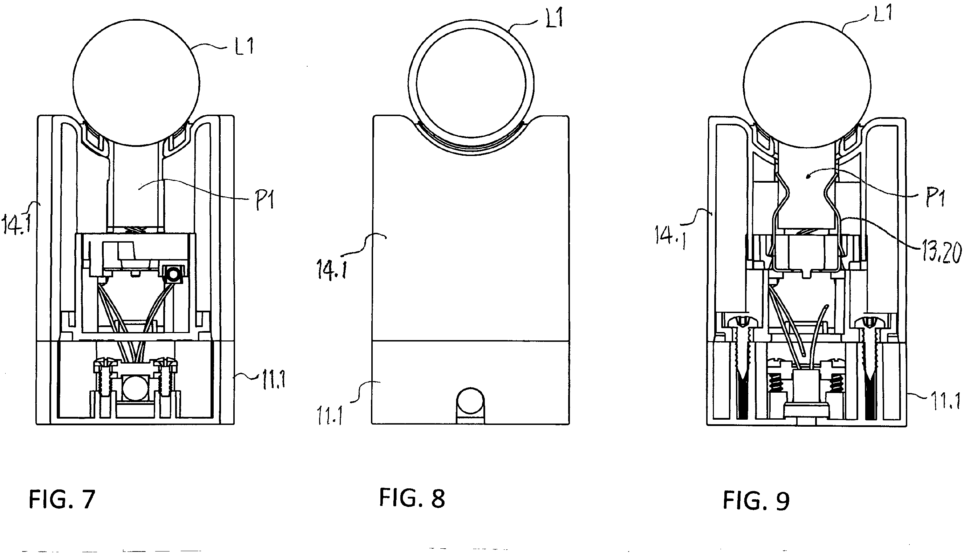

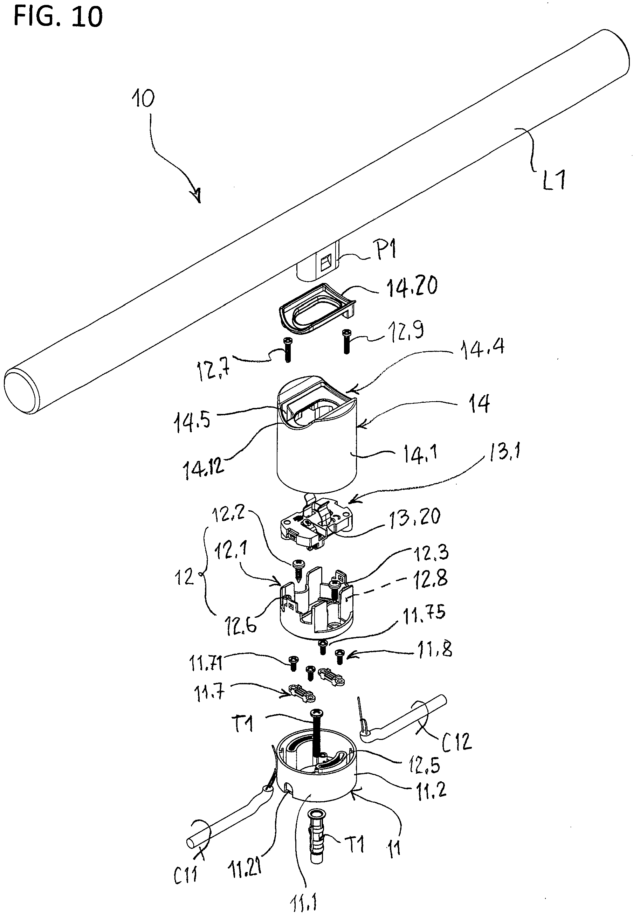

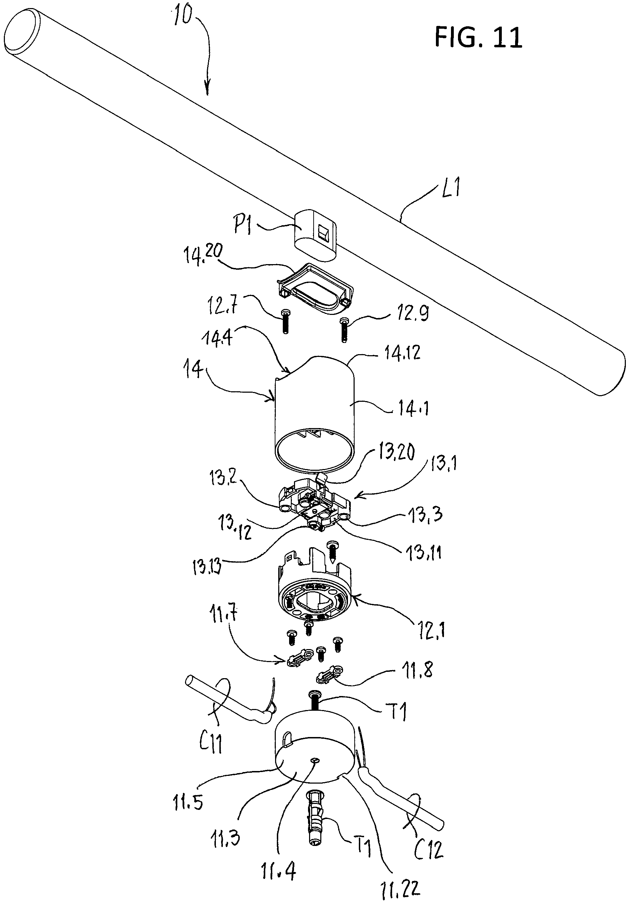

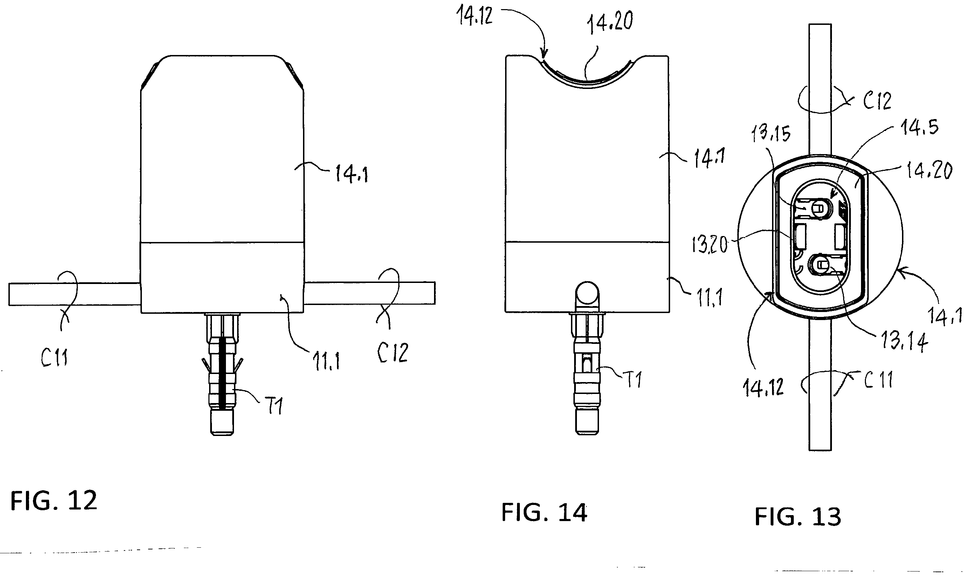

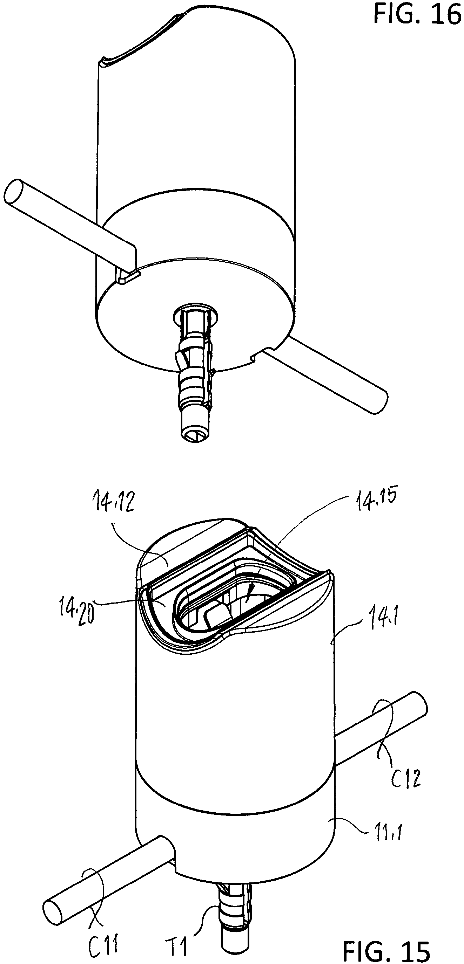

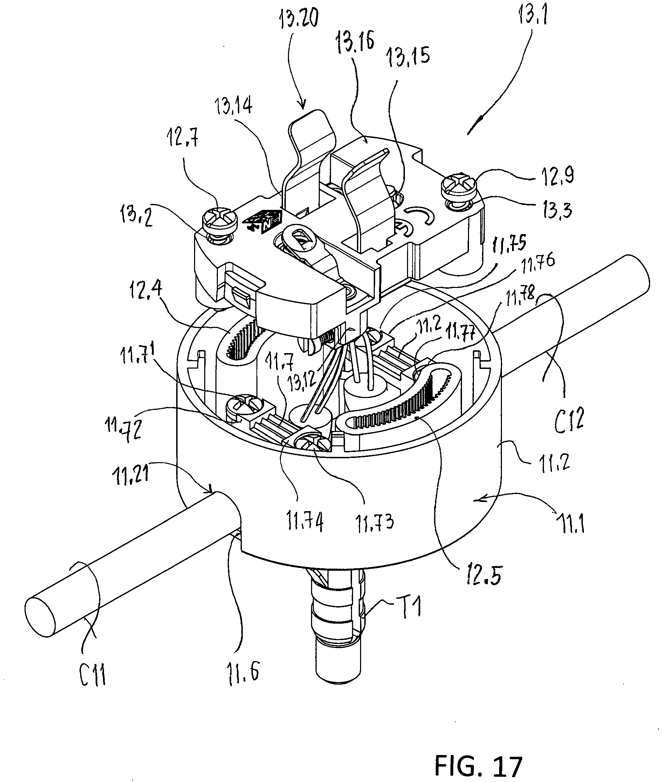

Figs. 1 to 17 and 35 refer to a first embodiment of the lighting apparatus according to the invention and therein:
   - Figs. 1 to 5 illustrate said lighting apparatus, in a front elevation view, in a plan view from above, in a side elevation view, in a perspective view from above and in a perspective view from below, respectively;
   - Fig. 6 is a view of the apparatus of Fig. 1 with a part in vertical section;
   - Fig. 7 is a view of the apparatus of Fig. 3 with a part in vertical section;
   - Fig. 8 is a view of the apparatus similar to that of Fig. 3, but in which a fastening means is omitted;
   - Fig. 9 is a view similar that of Fig. 7, but in which the section is taken according to a different vertical plane;
   - Figs. 10 and 11 illustrate, respectively, the apparatus according to Figs. 4 and 5 in an exploded view, in a different scale;
   - Figs. 12 to 16 illustrate, respectively, the apparatus according to Figs. 1 to 5 without an electric light bulb and in a different scale;
   - Fig. 17 is a schematic perspective exploded view, in an enlarged scale, wherein only some components parts of the apparatus according to the invention are illustrated with omission of the other component parts for the sake of clarity of explanation;
   - Fig. 35 illustrates two lighting apparatuses according to said first embodiment of the invention, without the respective electric light bulb and connected to each other in line;

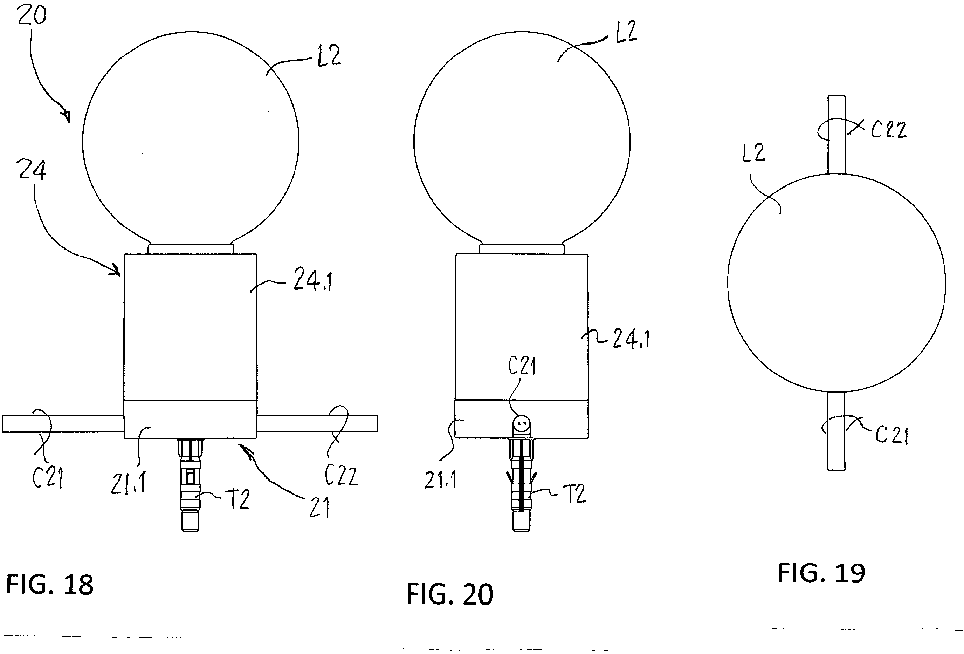

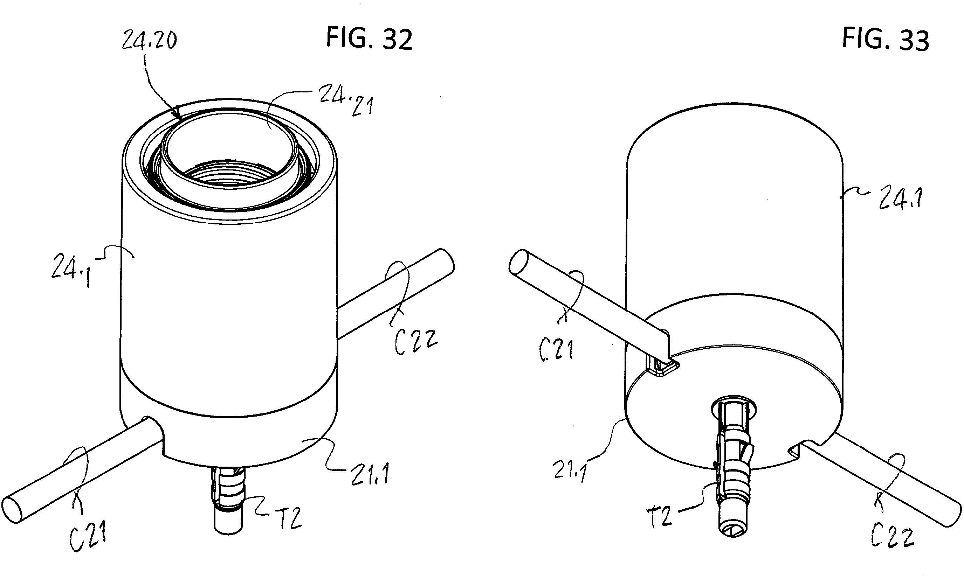

Figs. 18 to 34 and 36 refer to a second embodiment of the lighting apparatus according to the invention and therein:
   - Figs. 18 a 22 illustrate said lighting apparatus in a front elevation view, in a plan view from above, in a side elevation view, in a perspective view from above and in a perspective view from below, respectively;

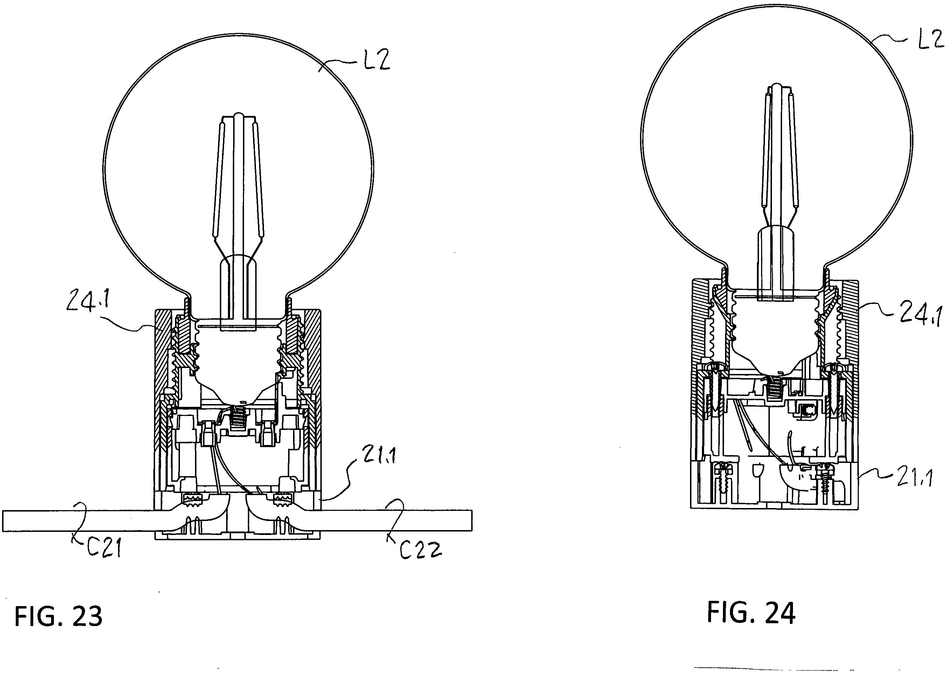

   - Fig. 23 is a view of the apparatus of Fig. 18 with a part in vertical section;
   - Fig. 24 is a view of the apparatus of Fig. 20 with a part in vertical section;

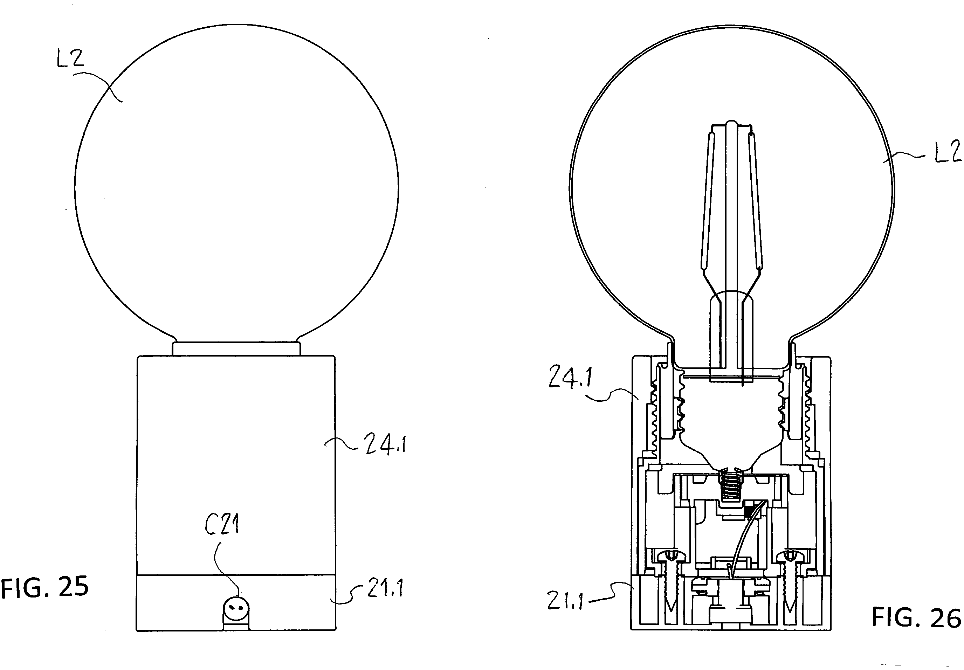

   - Fig. 25 is a view of the apparatus similar to that of Fig. 20, but in which a fastening means is omitted;
   - Fig. 26 is a view similar to that of Fig. 24 but in which the section is taken according to a different vertical plane;

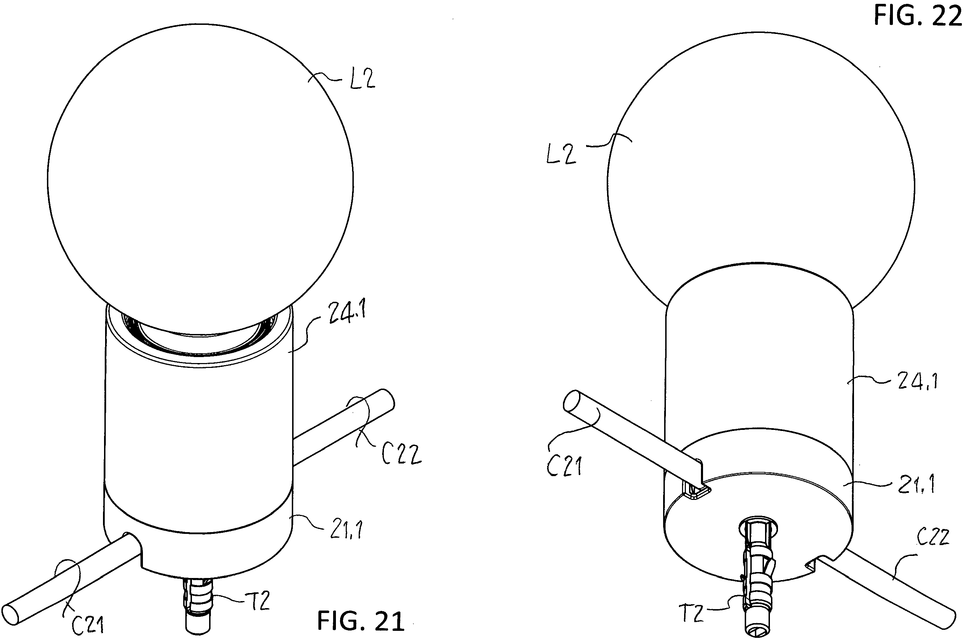

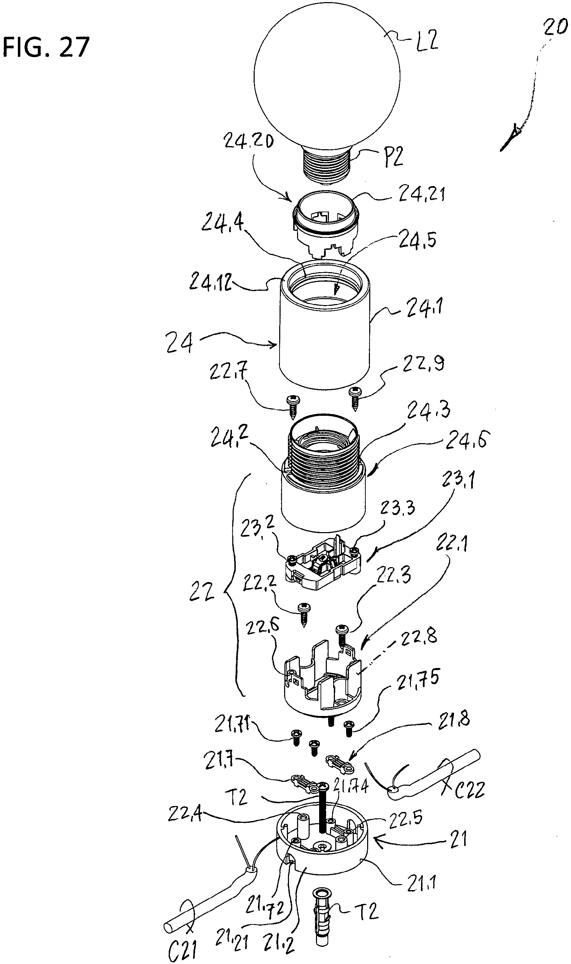

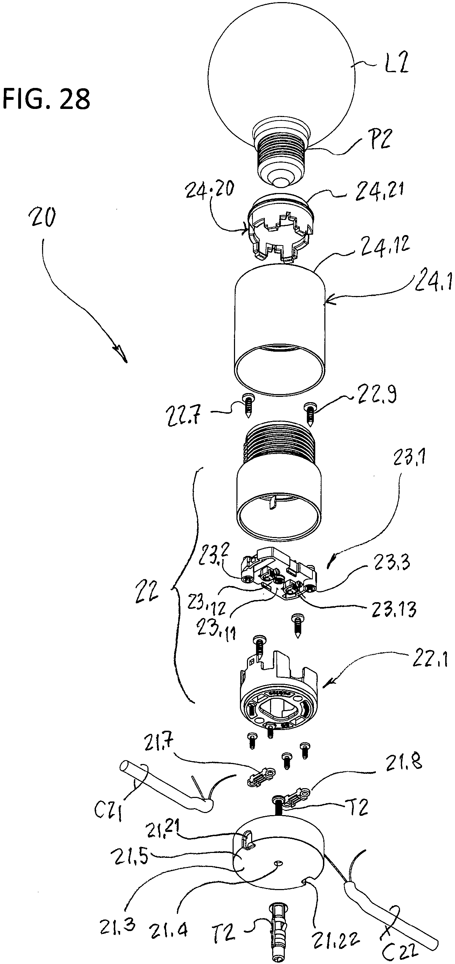

   - Figs. 27 and 28 illustrate, respectively, the apparatus according to Figs. 21 and 22 in an exploded view, in a different scale;

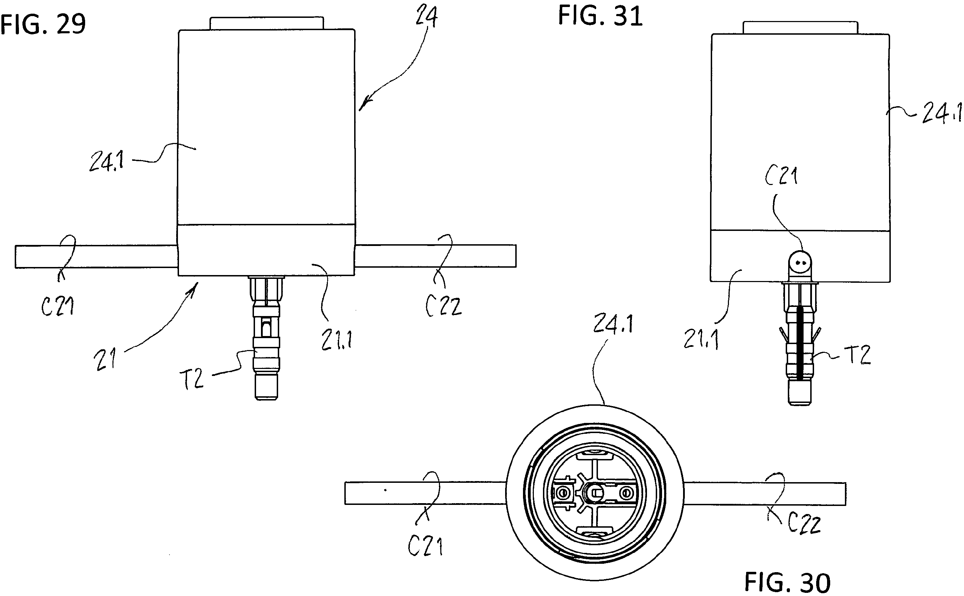

   - Figs. 29 to 33 illustrate, respectively, the apparatus according to Figs. 18 to 22 without an electric light bulb and in a different scale;

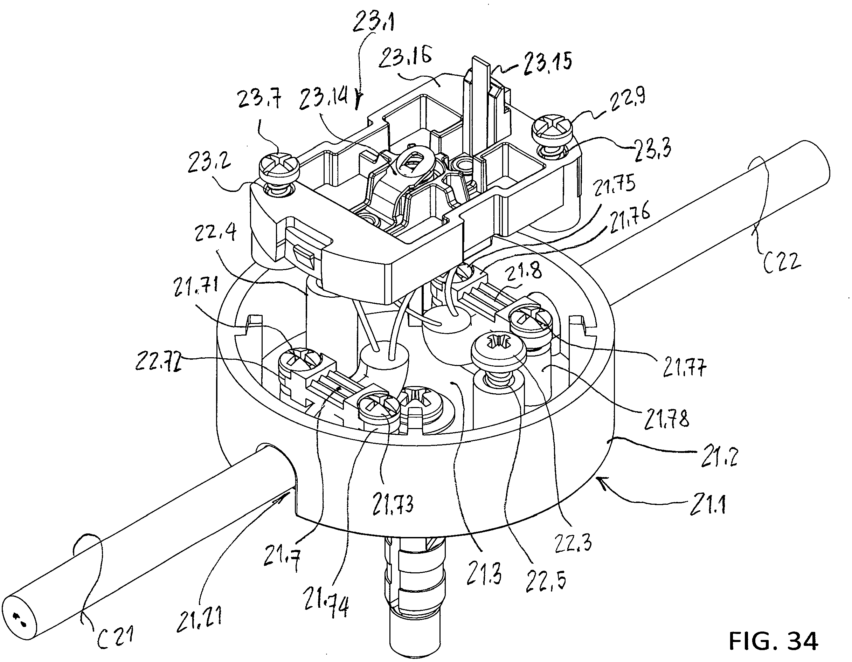

   - Fig. 34 is a schematic, perspective exploded view in an enlarged scale, wherein only some component parts of the apparatus according to the invention are illustrated with omission of the other component parts for the sake of clarity of explanation;

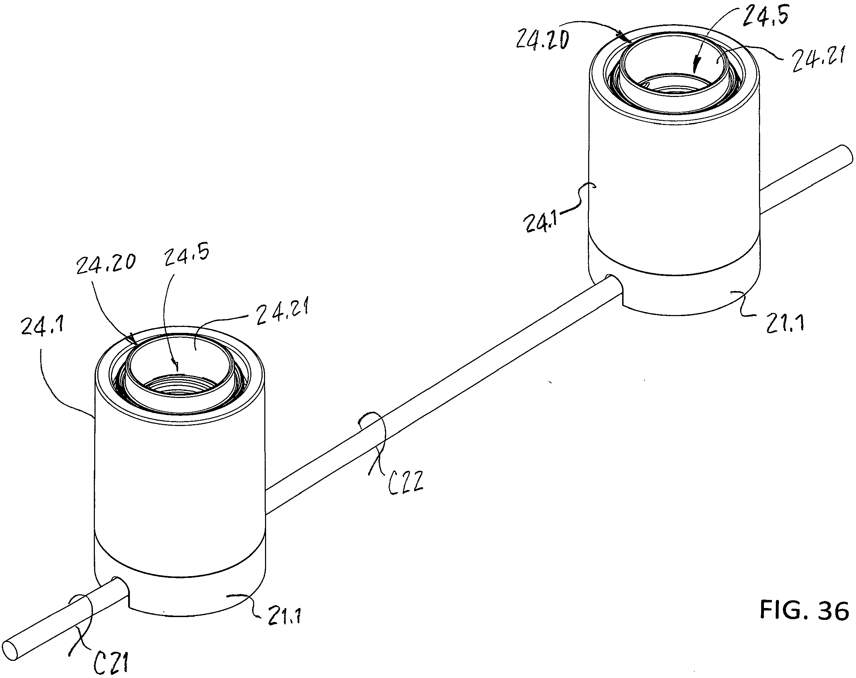

   - Fig. 36 illustrates two lighting apparatuses according to said first embodiment of the invention, without the respective electric light bulb and connected to each other in line.

With reference to the drawing, the lighting device according to the present invention is illustrated, by way of example, in two embodiments and is indicated, as a whole, with 10 and 20, respectively.

The two embodiments 10, 20 illustrate the lighting device according to the invention comprising parts having a similar structure and function. These parts are described only once, for the sake of brevity, with reference to both embodiments. In particular, the references that start with the number "1" refer to a first embodiment and the references that start with the number "2" refer to a second embodiment of the invention.

The lighting apparatus according to the invention is indicated in the drawing, as a whole, with 10, 20, respectively.

The lighting apparatus 10, 20 comprises an electric light bulb L1, L2, respectively, a first section of insulated electrical cable C11, C21, respectively, and a second section of insulated electrical cable C12, C22, respectively, each including at least one insulated live wire and one insulated neutral wire.

Said lighting apparatus 10, 20 further comprises:
- a supporting device 11, 21 with respect to an external holder, wherein said supporting device is configured as an open electrical box, which is fixed with respect to the external holder by means of a detachable fastening means T1, T2, respectively, and which holds inside it a first end of said first section of electrical cable and a first end of said second section of electrical cable, wherein at least the respective live and neutral wires are mutually connected both mechanically and electrically;
- a connecting device 12, 22 for the electrical and mechanical connection of said electric light bulb L1, L2, wherein said connecting device is fixed to said supporting device 11, 21 by means of detachable fastening means and holds a portion of said electric light bulb, arranged with the respective electrical contacts electrically connected to said mutually connected live and neutral wires and mechanically connected in a detachable manner to said supporting device 11, 21;
- a covering device 14, 24 which covers said electrical and mechanical connecting device 12, 22 and a part of said electric light bulb L1, L2, wherein said covering device 14, 24 comprises an external jacket 14.1, 24.1, which rests against said supporting device 11, 21, and a gasket 14.20, 24.21 that surrounds a part of said electric light bulb corresponding to said external jacket, and
   wherein a second end at least of the live wire and neutral wire of said first section of electrical cable C11, C21 is electrically connected to other electrical circuit means, and a second end at least of the live wire and neutral wire of said second section of electrical cable C12, C22 is electrically connected to further electrical circuit means. In particular, said supporting device 11, 21 comprises:
   - a cup-shaped body 11.1, 21.1, made of electrically insulating material, having at least one side wall 11.2, 21.2 with a first opening 11.21, 21.21 and a second opening 11.22, 21.22 and a bottom 11.3, 21.3, wherein said bottom has:
   - a first through hole 11.4, 21.4,
   - an outer face 11.5, 21.5 juxtaposed and fixed with respect to an external holder by means of a fastening dowel T1, T2 comprising a screw placed through said first through hole,
   - an inner face 11.6, 21.6, onto which are fixed:
   - a first detachable fastening means 11.7, 21.7 of a first end of said first section of electrical cable C11, C21, which is arranged passing through said first opening 11.21, 21.21 of said at least one side wall, wherein said first end of said first section of electrical cable has, inside said cup-shaped body, at least one first insulated live wire and one first insulated neutral wire,
   - a second detachable fastening means 11.8, 21.8 of a first end of said second section of electrical cable C12, C22, which is arranged passing through said second opening 11.22, 21.22 of said at least one side wall, wherein said first end of said second section of electrical cable has, inside said cup-shaped body, at least one second insulated live wire and one second insulated neutral wire, wherein:
      - said first insulated live wire and said second insulated live wire have, inside said cup-shaped body, respective contiguous ends, where the corresponding conducting wires are not insulated, are mechanically connected to one another and form an electrically conducting live head, and
      - said first insulated neutral wire and said second insulated neutral wire have, inside said cup-shaped body, respective contiguous ends, where the corresponding conducting wires are not insulated, are mechanically connected to one another and form an electrically conducting neutral head.

Moreover, it is specified that:
- said first fastening means 11.7, 21.7 is configured with a fixing bracket including:
   - a first detachable screw fastening member 11.71, 21.71 engaged in a corresponding first threaded seat 11.72, 21.72 provided in said bottom 11.3, 21.3,
   - a second detachable screw fastening member 11.73, 21.73 engaged in a corresponding second threaded seat 11.74, 21.74 provided in said bottom 11.3, 21.3,
- said second fastening means 11.8, 21.8 is configured with a fixing bracket including:
   - a third detachable screw fastening member 11.75, 21.75 engaged in a corresponding third threaded seat 11.76, 21.76 provided in said bottom 11.3, 21.3,
   - a fourth detachable screw fastening member 11.77, 21.77 engaged in a corresponding fourth threaded seat 11.78, 21.78 provided in said bottom 11.3, 21.3.

Moreover, said cup-shaped body 11.1, 21.1 has a cylindrical side wall 11.2, 21.2, and said connecting device 12, 22 for the electrical and mechanical connection of said electric light bulb L1, L2 comprises:
- a crown-like holder means 12.1, 22.1, made of electrically insulating material, juxtaposed in a coaxial arrangement with respect to said side wall 11.2, 21.2 of said cup-shaped body and fixed to said cup-shaped body 11.1, 21.1 by means of a fifth detachable screw fastening member 12.2, 22.2 and a sixth detachable screw fastening member 12.3, 22.3, engaged in a corresponding fifth seat 12.4, 22.4 and in a corresponding sixth seat 12.5, 22.5 respectively, which are provided in said bottom 11.3, 21.3 of said cup-shaped body,
   - wherein said crown-like holder means 12.1, 22.1 has an internal seat housing said electrically conducting live head and said electrically conducting neutral head and provides a seventh threaded seat 12.6, 22.6 which receives and holds a seventh detachable screw fastening member 12.7, 22.7 and a eighth threaded seat 12.8, 22.8 which receives and holds an eighth detachable screw fastening member 12.9, 22.9;
- an electrical contact holder plate 13.1, 23.1, made of electrically insulating material, housed and held in said crown-like holder means 12.1, 22.1, having a second through hole 13.2, 23.2 passed through by said seventh detachable screw fastening member 12.7, 22.7 and a third through hole 13.3, 23.3 passed through by said eighth detachable screw fastening member 12.9, 22.9,
   - wherein said electrical contact holder plate 13.1, 23.1 comprises, on a first face 13.11, 23.11, a first electrical terminal 13.12, 23.12, which fixes said electrically conducting live head, in an electrically conducting manner, and a second electrical terminal 13.13, 23.13, which fixes said electrically conducting neutral head, in an electrically conducting manner, and
   - wherein said first electrical terminal 13.12, 23.12 is electrically connected to a neutral electrical contact 13.14, 23.14 and said second electrical terminal 13.13, 23.13 is electrically connected to a live electrical contact 13.15, 23.15, which are fixed with respect to a second face 13.16, 23.16 of said electrical contact holder plate.

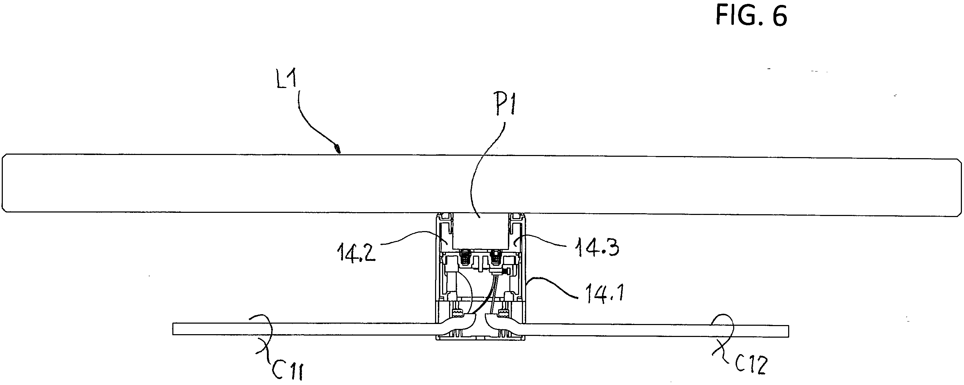

According to a first embodiment of the invention, said covering device 14 comprises said external jacket 14.1, which is tubular, contains said crown-like holder means 12.1 with said electrical contact holder plate 13.1, has a fourth through hole 14.2 and a fifth through hole 14.3 (Fig. 6) whose axes are aligned with the axis of said tubular jacket and, at a first axial end, is juxtaposed with respect to said cup-shaped body 11.1 and is fixed to said crown-like holder means by means of said seventh detachable screw fastening member 12.7 and said eighth detachable screw fastening member 12.9, engaged in said seventh threaded seat 12.6 and said eighth threaded seat 12.8 of said crown-like holder means 12.1, through said second through hole 13.2 and said third through hole 13.3 of said electrical contact holder plate and said fourth through hole 14.2 and said fifth through hole 14.3, respectively, of said external tubular jacket.

Said external tubular jacket 14.1 has, at a second axial end 14.12 opposite said first axial end, a seat 14.4 with an opening 14.5, in which a part P1 of said electric light bulb L1 with electrical contacts is inserted, and which is configured so as to surround said part P1 of said electric light bulb L1 arranged with its electrical contacts in electrically conducting contact, respectively, with said live electrical contact 13.15 and with said neutral electrical contact 13.14 of said electrical contact holder plate 13.1.

In particular, it is specified that:
- said electric light bulb L1 is a tubular LED light bulb having said part P1 configured for radial median coupling, type S14D, having electrical contacts and inserted through said opening 14.5 of said second axial end 14.12 of the external jacket 14.1;
- said electrical contact holder plate 13.1 comprises a fixed U-shaped elastic clamp 13.20, with two opposing arms, protruding from said second face 13.16 and which elastically clamp said part P1 of said electric light bulb L1;
- said second axial end 14.12 of the external jacket 14.1 has a surface configured as a partially cylindrical cradle, extending around said opening 14.5, opposite to and surrounding a corresponding portion of the lateral surface of said electric light bulb L1 adjacent to said part P1,
- said sealing gasket 14.20 comprises a perforated flexible plate made of electrically insulating material, which is removable and is interposed between said surface configured as a cradle of said second axial end 14.12 and said portion of the lateral surface of said electric light bulb L1, and surrounds said opening 14.5 of said second axial end 14.12 of the external jacket 14.1 and seals said fourth through hole 14.2 and said fifth through hole 14.3 of said external jacket 14.1.

With reference to a second embodiment of the invention, it is specified that:
- said electric light bulb L2 is an incandescent light bulb which has said part P2 configured as a spiral ferrule with the electrical contacts;
- said connecting device 22 for the electrical and mechanical connection of said electric light bulb L2 comprises a cylindrical sleeve 24.6, which contains said crown-like holder means 22.1 with said electrical contact holder plate 23.1, has a fourth through hole 24.2 and a fifth through hole 24.3 whose axes are aligned with the axis of said sleeve 24.6 and which, at a first axial end zone, is juxtaposed with respect to said cup-shaped body 21.1 and is fixed to said crown-like holder means by means of said seventh detachable screw fastening member 22.7 and said eighth detachable screw fastening member 22.9, engaged in said seventh threaded seat 22.6 and said eighth threaded seat 22.8 of said crown-like holder means 22.1, through said second through hole 23.2 and said third through hole 23.3 of said electrical contact holder plate;
- said sleeve 24.6 has a second axial end zone configured as a spiral with a shape complementary to said ferrule part P2 of said light bulb L2 and wherein it is engaged by screwing said ferrule part P2, which is arranged with its electrical contacts in contact with said live 23.15 and neutral 23.14 electrical contacts of said electrical contact holder plate 23.1.

In particular, it should be noted that:
- said external jacket 24.1 is tubular and contains said sleeve 24.6, including said crown-like holder means 22.1 with said electrical contact holder plate 23.1 and, at a first axial end, is juxtaposed with respect to said cup-shaped body 21.1,
- said external jacket 24.1 has, at a second axial end 24.12, opposite said first axial end, an opening 24.5 and an internal thread 24.4, in which is detachable engaged an externally threaded ring nut 24.20, which provides a collar 24.21 at least in part external to said second axial end 24.12;
- said collar 24.21 is configured as a gasket that tightly surrounds a portion of said electric light bulb L2 contiguous to said ferrule part P2 with electrical contacts arranged with its electrical contacts respectively in contact, in an electrically conducting manner, with said live electrical contact 23.15 and said neutral electrical contact 23.14 of said electrical contact holder plate 23.1.

With reference to said first embodiment of the invention, it is specified that said fifth seat 12.4 and said sixth seat 12.5 of said cup-shaped body 11.1 are shaped as slotted holes having a circular arc arrangement concentric with respect to said cylindrical side wall 11.2 of said cup-shaped body 11.1.

With reference both to the first embodiment of the invention and to the second embodiment of the invention, it is specified that:
- said cup-shaped body 11.1, 21.1 has a cylindrical side wall 11.2, 21.2;
- said first detachable screw fastening member 11.71, 21.71,
- said second detachable screw fastening member 11.73, 21.73,
- said third detachable screw fastening member 11.75, 21.75,
- said fourth detachable screw fastening member 11.77, 21.77,
- said fifth detachable screw fastening member 12.2, 22.2,
- said sixth detachable screw fastening member 12.3, 22.3,
- said seventh detachable screw fastening member 12.7, 22.7, and
- said eighth detachable screw fastening member 12.9, 22.9
have their axes parallel to one another and with respect to the axis of said cylindrical side wall 11.2, 21.2 of said cup-shaped body 11.1, 21.1, and are provided with slotted heads for use with a screwdriver, placed distal with respect to the bottom 11.3, 21.3 of said cup-shaped body 11.1, 21.1.

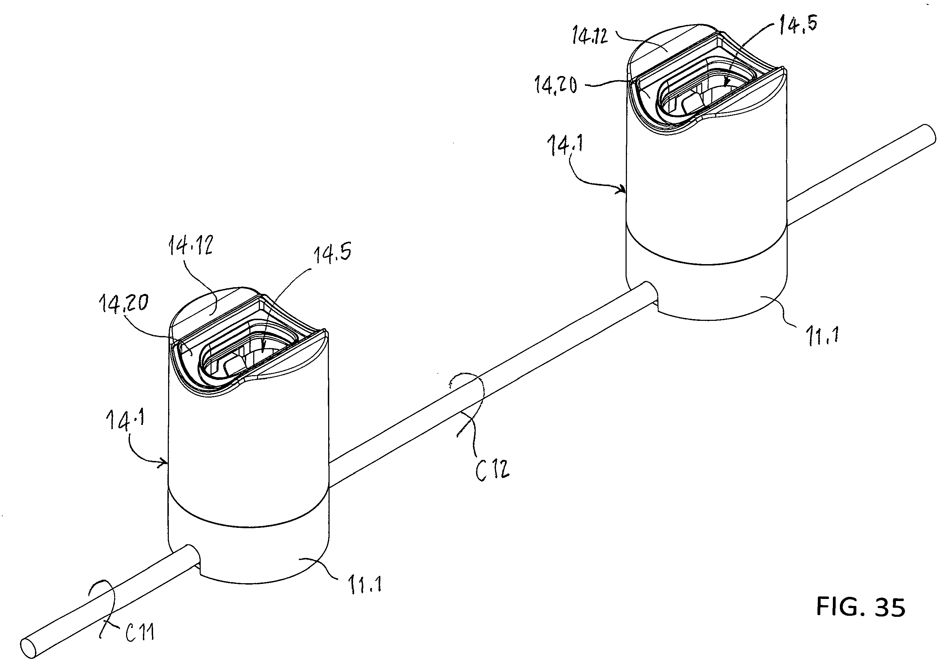

With reference to Figs. 35, 36 it is specified that several lighting apparatuses 10, 20, respectively, can be connected to one another in series according to an arrangement in which the first section of electrical cable C11, C21 of a lighting apparatus downstream is provided by the second section of electrical cable C12, C22 of the lighting apparatus upstream, with respect to the electrical power supply source.

As can be seen from the description above, the present invention makes it possible to achieve the objects described in the introductory part in a simple and effective manner.

## Claims

1. Lighting apparatus (10, 20) comprising an electric light bulb (L1, L2), a first section of insulated electrical cable (C11, C21) and a second section of insulated electrical cable (C12, C22), each including at least one insulated live wire and one insulated neutral wire, wherein said lighting apparatus (10, 20) also comprises:
- a supporting device (11, 21) with respect to an external holder, wherein said supporting device is configured as an open electrical box, which is fixed with respect to an external holder by means of detachable fastening means (T1, T2) and which holds inside it a first end of said first section of electrical cable and a first end of said second section of electrical cable, wherein at least the respective live and neutral wires are mutually connected both mechanically and electrically;
- a connecting device (12, 22) for the electrical and mechanical connection of said electric light bulb (L1, L2), wherein said connecting device is fixed to said supporting device (11, 21) by means of detachable fastening means and holds a portion of said electric light bulb, arranged with the respective electrical contacts electrically connected to said mutually connected live and neutral wires and mechanically connected in a detachable manner to said supporting device (11, 21);
- a covering device (14, 24) which covers said electrical and mechanical connecting device (12, 22) and a part of said electric light bulb (L1, L2), wherein said covering device (14, 24) comprises an external jacket (14.1, 24.1), which rests against said supporting device (11, 21), and a gasket (14.20, 24.21) that surrounds a part of said electric light bulb corresponding to said external jacket, and
wherein a second end at least of the live wire and neutral wire of said first section of electrical cable (C11, C21) is electrically connected to other electrical circuit means, and a second end at least of the live wire and neutral wire of said second section of electrical cable (C12, C22) is electrically connected to further electrical circuit means, **characterized in that** said electrical and mechanical connection device (12, 22) for said electric light bulb (L1, L2) comprises:
- a crown-like holder means (12.1, 22.1), made of electrically insulating material, juxtaposed in a coaxial arrangement with respect to said side wall (11.2, 21.2) of said cup-shape body and fixed to said cup-shape body (11.1, 21.1) by means of a fifth detachable screw fastening member (12.2, 22.2) and a sixth detachable screw fastening member (12.3, 22.3), engaged in a corresponding fifth seat (12.4, 22.4) and in a corresponding sixth seat (12.5, 22.5) respectively, which are provided in said bottom (11.3, 21.3) of said cup-shape body,
- wherein said crown-like holder means (12.1, 22.1) has an internal seat housing said electrically conducting live head and said electrically conducting neutral head and provides a seventh threaded seat (12.6, 22.6) which receives and holds a seventh detachable screw fastening member (12.7, 22.7) and an eighth threaded seat (12.8, 22.8) which receives and holds an eighth detachable screw fastening member (12.9, 22.9);
- an electrical contact holder plate (13.1, 23.1), made of electrically insulating material, housed and held in said crown-like holder means (12.1, 22.1), having a second through hole (13.2, 23.2) passed through by said seventh detachable screw fastening member (12.7, 22.7) and a third through hole (13.3, 23.3) passed through by said eighth detachable screw fastening member (12.9, 22.9),
- wherein said electrical contact holder plate (13.1, 23.1) comprises, on a first face (13.11, 23.11), a first electrical terminal (13.12, 23.12), which fixes said electrically conducting live head, in an electrically conducting manner, and a second electrical terminal (13.13, 23.13), which fixes said electrically conducting neutral head, in an electrically conducting manner, and
- wherein said first electrical terminal (13.12, 23.12) is electrically connected to a neutral electrical contact (13.14, 23.14) and said second electrical terminal (13.13, 23.13) is electrically connected to a live electrical contact (13.15, 23.15), which are fixed with respect to a second face (13.16, 23.16) of said contact holder plate.

2. Lighting apparatus (10, 20) according to claim 1, **characterized in that** said supporting device (11, 21) comprises:
- a cup-shape body (11.1, 21.1), made of electrically insulating material, having at least one side wall (11.2, 21.2) with a first opening (11.21, 21.21) and a second opening (11.22, 21.22) and a bottom (11.3, 21.3), wherein said bottom has:
- a first through hole (11.4, 21.4),
- an outer face (11.5, 21.5) juxtaposed and fixed with respect to an external holder by means of a fastening dowel (T1, T2) comprising a screw placed through said first through-hole,
- an inner face (11.6, 21.6), onto which are fixed:
- a first detachable fastening means (11.7, 21.7) for a first end of said first section of electrical cable (C11, C21), which is arranged passing through said first opening (11.21, 21.21) of said at least one side wall, wherein said first end of said first section of electrical cable has, inside said cup-shape body, at least one first insulated live wire and one first insulated neutral wire,
- a second detachable fastening means (11.8, 21.8) for a first end of said second section of electrical cable (C12, C22), which is arranged passing through said second opening (11.22, 21.22) of said at least one side wall, wherein said first end of said second section of electrical cable has, inside said cup-shape body, at least one second insulated live wire and one second insulated neutral wire, wherein:
- said first insulated live wire and said second insulated live wire have, inside said cup-shape body, respective contiguous ends, where the corresponding conducting wires are not insulated, are mechanically connected to one another and form an electrically conducting live head, and
- said first insulated neutral wire and said second insulated neutral wire have, inside said cup-shape body, respective contiguous ends, where the corresponding conducting wires are not insulated, are mechanically connected to one another and form an electrically conducting neutral head.

3. Lighting apparatus (10, 20) according to claim 2, **characterized in that**:
- said first fastening means (11.7, 21.7) is configured with a fixing bracket including:
- a first detachable screw fastening member (11.71, 21.71) engaged in a corresponding first threaded seat (11.72, 21.72) provided in said bottom (11.3, 21.3),
- a second detachable screw fastening member (11.73, 21.73) engaged in a corresponding second threaded seat (11.74, 21.74) provided in said bottom (11.3, 21.3),
- said second fastening means (11.8, 21.8) is configured with a fixing bracket including:
- a third detachable screw fastening member (11.75, 21.75) engaged in a corresponding third threaded seat (11.76, 21.76) provided in said bottom (11.3, 21.3),
- a fourth detachable screw fastening member (11.77, 21.77) engaged in a corresponding fourth threaded seat (11.78, 21.78) provided in said bottom (11.3, 21.3).

4. Lighting apparatus (10) according to claim 1, **characterized in that** said covering device (14) comprises:
- said external jacket (14.1) which is tubular, contains said crown-like holder means (12.1) with said contact holder plate (13.1), has a fourth through hole (14.2) and a fifth through hole (14.3) whose axes are aligned with the axis of said tubular jacket and, at a first axial end, is juxtaposed with respect to said cup-shape body (11.1) and is fixed to said crown-like holder means by means of said seventh detachable screw fastening member (12.7) and said eighth detachable screw fastening member (12.9), engaged in said seventh threaded seat (12.6) and said eighth threaded seat (12.8), respectively, of said crown-like holder means (12.1), through said second through hole (13.2) and said third through hole (13.3) of said contact holder plate and said fourth through hole (14.2) and said fifth through hole (14.3), respectively, of said external tubular jacket,
- wherein said external tubular jacket (14.1) has, at a second axial end (14.12) opposite said first axial end, a seat (14.4) with an opening (14.5), in which a part (P1) of said electric light bulb (L1) with electrical contacts is inserted, and which is configured so as to surround said part (P1) of said electric light bulb (L1) arranged with its electrical contacts in electrically conducting contact with said live electrical contact (13.15) and with said neutral electrical contact (13.14) of said electrical contact holder plate (13.1).

5. Lighting apparatus (10) according to claim 1, wherein:
- said electric light bulb (L1) is a tubular LED light bulb having said part (P1) configured for radial median coupling, type S14D, having electrical contacts and inserted through said opening (14.5) of said second axial end (14.12) of the external jacket (14.1);
- said contact holder plate (13.1) comprises a fixed U-shaped elastic clamp (13.20), with two opposing arms, protruding from said second face (13.16) and which elastically clamp said part (P1) of said electric light bulb (L1);
- said second axial end (14.12) of the external jacket (14.1) has a surface configured as a partially cylindrical cradle, extending around said opening (14.5), opposite to and surrounding a corresponding portion of the lateral surface of said electric light bulb (L1) adjacent to said part (P1),
**characterized in that** said sealing gasket (14.20) comprises a perforated flexible plate made of electrically isolated material, which is removable and is interposed between said surface configured as a cradle of said second axial end (14.12) and said portion of the lateral surface of said electric light bulb (L1), and surrounds said opening (14.5) of said second axial end (14.12) of the external jacket (14.1) and seals said fourth through hole (14.2) and said fifth through hole (14.3) of said external jacket (14.1).

6. Lighting apparatus (20) according to claim 1, wherein:
- said electric light bulb (L2) is an incandescent light bulb which has said part (P2) configured as a spiral ferrule with the electrical contacts;
- said electrical and mechanical connecting device (22) for said electric light bulb (L2) comprises a cylindrical sleeve (24.6), which contains said crown-like holder means (22.1) with said contact holder plate (23.1), has a fourth through hole (24.2) and a fifth through hole (24.3) whose axes are aligned with the axis of said sleeve (24.6) and which, at a first axial end zone, is juxtaposed with respect to said cup-shape body (21.1) and is fixed to said crown-like holder means by means of said seventh detachable screw fastening member (22.7) and said eighth detachable screw fastening member (22.9), engaged in said seventh threaded seat (22.6) and said eighth threaded seat (22.8), respectively, of said crown-like holder means (22.1), through said second through hole (23.2) and said third through hole (23.3) of said contact holder plate;
- said sleeve (24.6) has a second axial end zone configured as a spiral with a shape complementary to said ferrule part (P2) of said light bulb (L2) and wherein it is engaged by screwing said ferrule part (P2), which is arranged with its electrical contacts in contact with said live (23.15) and neutral (23.14) electrical contacts of said electrical contact holder plate (23.1).

7. Lighting apparatus (20) according to claim 6, wherein:
- said external jacket (24.1) is tubular and contains said sleeve (24.6), including said crown-like holder means (22.1) with said contact holder plate (23.1) and, at a first axial end, is juxtaposed with respect to said cup-shape body (21.1),
- said external jacket (24.1) has, at a second axial end (24.12), opposite said first axial end, an opening (24.5) and an internal thread (24.4), in which is detachably engaged an externally threaded ring nut (24.20), which provides a collar (24.21) at least in part external to said second axial end (24.12);
- said collar (24.21) is configured as a gasket which tightly surrounds a portion of said electric light bulb (L2) contiguous to said ferrule part (P2) with electrical contacts, arranged with its electrical contacts respectively in contact, in an electrically conducting manner, with said live electrical contact (23.15) and said neutral electrical contact (23.14) of said electrical contact holder plate (23.1).

8. Lighting apparatus (10) according to claim 1, wherein said fifth seat (12.4) and said sixth seat (12.5) of said cup-shape body (11.1) are shaped as slotted holes having a circular arc arrangement concentric with respect to said cylindrical side wall (11.2) of said cup-shape body (11.1).

9. Lighting apparatus (10, 20) according to claims 1 and 4, wherein:
- said cup-shape body (11.1, 21.1) has a cylindrical side wall (11.2, 21.2);
- said first detachable screw fastening member (11.71, 21.71),
- said second detachable screw fastening member (11.73, 21.73),
- said third detachable screw fastening member (11.75, 21.75),
- said fourth detachable screw fastening member (11.77, 21.77),
- said fifth detachable screw fastening member (12.2, 22.2),
- said sixth detachable screw fastening member (12.3, 22.3),
- said seventh detachable screw fastening member (12.7, 22.7) and
- said eighth detachable screw fastening member (12.9, 22.9),
have their axes parallel to one another and with respect to the axis of said cylindrical side wall (11.2, 21.2) of said cup-shape body (11.1, 21.1), and are provided with slotted heads for use with a screwdriver, placed distal with respect to the bottom (11.3, 21.3) of said cup-shape body (11.1, 21.1).
